# EUROPEAN PATENT SPECIFICATION

(11) **EP 3 705 723 B1**
(45) Date of publication and mention of the grant of the patent: **22.02.2023**
(21) Application number: 20161371.8
(22) Date of filing: 06.03.2020
(51) Int. Cl.: F04C 18/02, F04C 23/00, F01C 21/02

(54) **SCROLL COMPRESSOR**
SPIRALVERDICHTER
COMPRESSEUR À SPIRALES

(30) Priority: 08.03.2019 KR 20190026741
(43) Date of publication of application: 09.09.2020
(73) Proprietor: LG Electronics Inc., 07336 SEOUL (KR)
(72) Inventor: PARK, Sangbaek, 08592 Seoul (KR); CHOI, Jungsun, 08592 Seoul (KR); KIM, Cheolhwan, 08592 Seoul (KR)
(74) Representative: Vossius & Partner Patentanwälte Rechtsanwälte mbB

(56) References cited:
- AT-B- 107 213
- JP-A- H08 291 795
- JP-A- 2007 162 571
- US-A1- 2010 166 589

## Description

### CROSS-REFERENCE TO RELATED APPLICATIONS

This application claims the benefit of Korean Patent Application No. 10-2019-0026741, filed on March 8, 2019.

### BACKGROUND OF THE INVENTION

### Field of the Invention

The present invention relates to a compressor having a structure for compensating for eccentricity of a rotary shaft caused by a driving load.

### Discussion of the Related Art

Generally, a compressor is applied to a vapor compression type refrigeration cycle (hereinafter referred to simply as a refrigeration cycle) such as a refrigerator or an air conditioner. The compressor compresses the refrigerant to provide work necessary for heat exchange in the refrigeration cycle. Compressors can be divided into reciprocating compressors, rotary compressors, and scroll compressors according to how the refrigerant is compressed.

The reciprocating compressor is a system in which the volume of the compression space is varied while the piston reciprocates in the cylinder. The rotary compressor compresses the refrigerant while the rolling piston pivotally moves using the rotating force of the drive unit.

The scroll compressor is a compressor in which an orbiting scroll is pivotably engaged with a fixed scroll fixed in the inner space of a hermetically sealed container to form a compression chamber between a fixed lap of the fixed scroll and an orbiting lap of the orbiting scroll. When the orbiting scroll rotates, the refrigerant is introduced, compressed and discharged as the volume of the compression chamber varies.

The scroll compressor is widely employed in an air conditioner or the like to compress a refrigerant because it can obtain a relatively high compression ratio as compared with other types of compressors and can obtain a stable torque as the intake, compression and discharge operations of the refrigerant are smoothly connected to each other.

Scroll compressors may be divided into an upper compression compressor or a lower compression compressor depending on the positions of the drive motor and the compression unit. In the upper compression compressor, the compression unit is positioned over the drive motor. In the lower compression compressor, the compression unit is positioned under the drive motor.

Here, in the case of the lower compression scroll compressor, a discharge cover is hermetically coupled to the lower surface of the fixed scroll to prevent the refrigerant discharged from the compression chamber to the inner space of the casing from mixing with the oil contained in an oil reservoir space.

Referring to U.S. Patent Application Publication No. 2017/0067466, a conventional scroll compressor includes a case defining an outer appearance and having a discharge portion through which a refrigerant is discharged, a compression unit fixed to the case and configured to compress the refrigerant, and a drive unit is fixed to the case and configured to drive the compression unit, wherein the compression unit and the drive unit are connected by a rotary shaft rotatably coupled to the drive unit.

The compression unit includes a fixed scroll fixed to the case and having a fixed lap, and an orbiting scroll including an orbiting lap engaging with the fixed lap and driven by the rotary shaft. In the conventional scroll compressor, the rotary shaft is eccentrically disposed, and the orbiting scroll is fixed to the eccentric rotary shaft and rotated. Thereby, the orbiting scroll revolves (orbits) around the fixed scroll to compress the refrigerant.

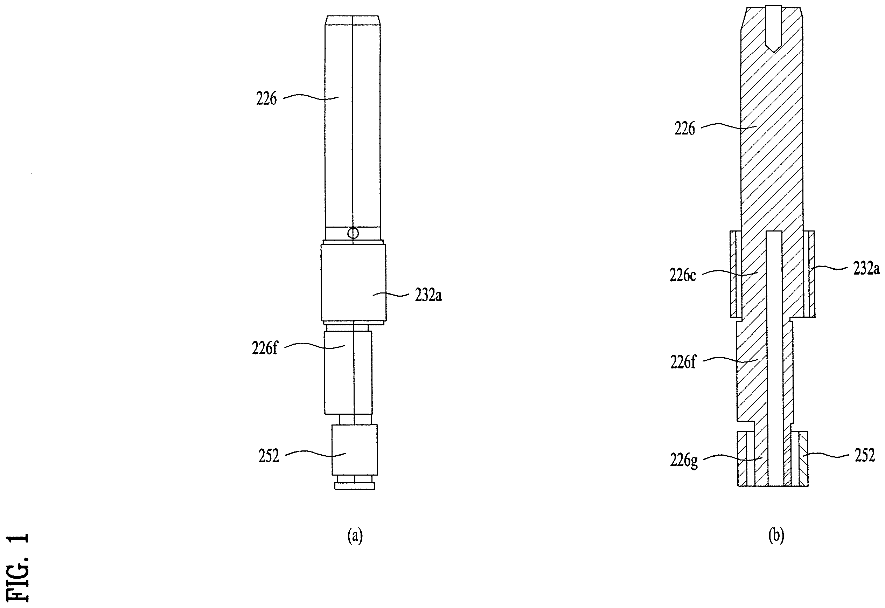

FIG. 1 is a sectional view showing the structure of a rotary shaft and a bearing of a conventional scroll compressor. FIG. 1(a) is a view showing the shape of the bearing and the rotary shaft 226, and FIG. 1(b) is a sectional view of FIG. 1(a).

As shown in FIG. 1(a), the rotary shaft and the bearing arranged around and rotatably coupled to the rotary shaft are engaged with the main frame and the fixed scroll, and thus the position thereof is fixed when the rotary shaft rotates. That is, the main frame and the fixed scroll are fixed so as not to rotate, and the bearing is interposed such that the rotary shaft can rotate with minimized friction.

As shown in FIG. 1(b), the bearing may be designed to have an inner diameter slightly larger than the diameter of the rotary shaft such that the bearing and the rotary shaft are not in contact with each other but spaced apart from each other by a predetermined distance. The scroll compressor includes an eccentric portion of the orbiting scroll for varying the volume of the compression space. The eccentric portion should have a sufficient size to sufficiently induce a volume change during rotation of the orbiting scroll. However, when the scroll compressor rotates, a portion of the rotary shaft where the orbiting scroll is positioned tends to bend.

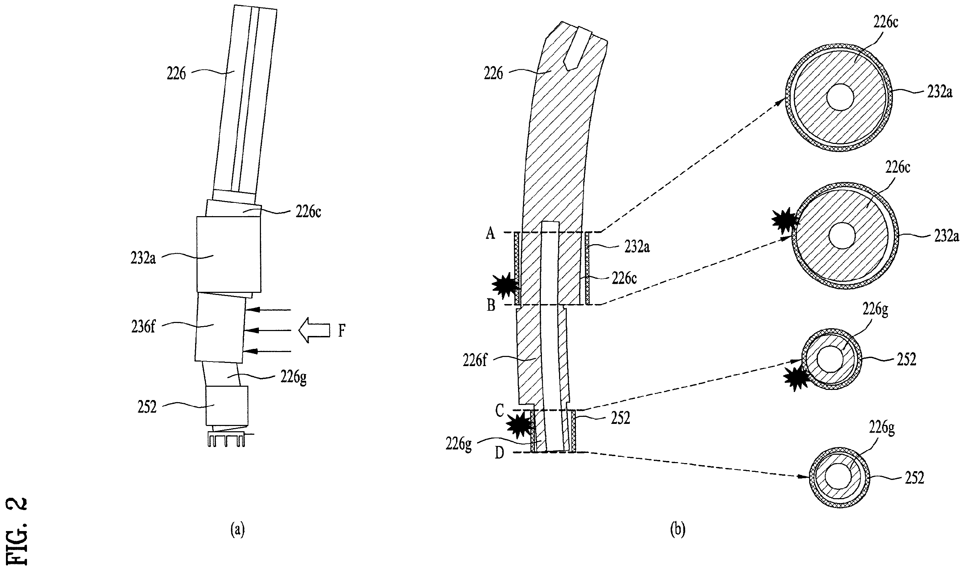

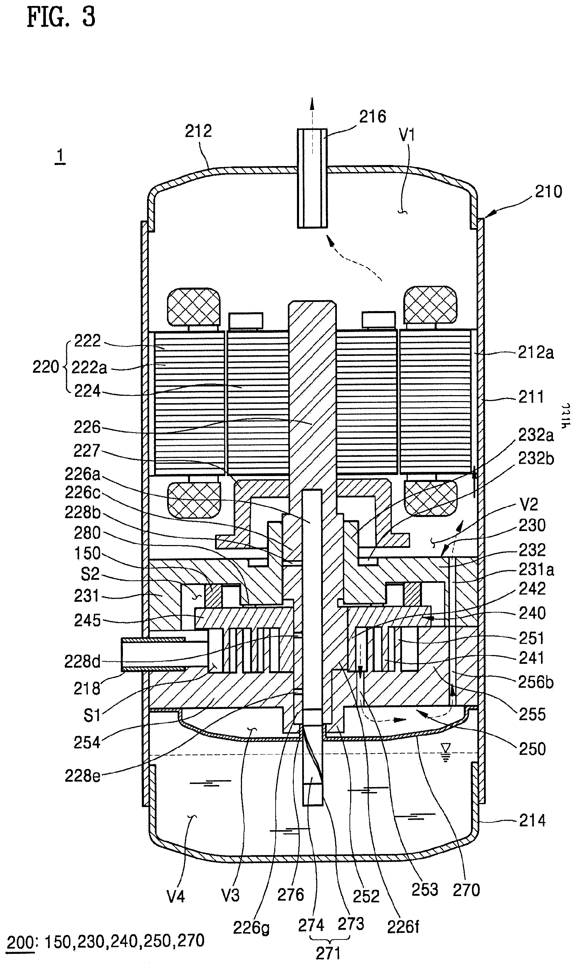

FIG. 2 is a view showing the rotary shaft and the bearing during rotation of the rotary shaft. As the orbiting scroll portion is eccentric, the rotary shaft is bent when it rotates as shown in FIG. 3.

If the orbiting scroll comes into contact with the bearing and friction occurs, an oil film may not be formed uniformly, and the rotation of the orbiting scroll may become unstable. In addition, abrasion caused by friction and power load may be increased, resulting in durability and performance deterioration of the scroll compressor.

JP 2007-162571 A describes a scroll compressor with a twin bearing structure journaling a compression part on both sides, in which the bearing structure prevents uneven contact of a bearing part and is easy to be assembled.

### SUMMARY OF THE INVENTION

Accordingly, the present invention is directed to a scroll compressor that substantially obviates one or more problems due to limitations and disadvantages of the related art.

An object of the present invention is to provide a scroll compressor capable of addressing performance deterioration of a bearing resulting from eccentricity of a rotary shaft caused by a driving load.

The objects of the present invention are not limited to the above-mentioned objects, and other objects and advantages of the present invention which are not mentioned may be understood upon examination of the following description and more clearly understood upon examination of the embodiments of the present invention. The objects and other advantages of the invention may be realized and attained by means particularly pointed out in the appended claims.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The present invention is defined by independent claim 1; the dependent claims define embodiments of the invention. To achieve these objects and other advantages and in accordance with the purpose of the invention, as embodied and broadly described herein, a scroll compressor includes a casing, a drive motor arranged in an inner space of the casing, a rotary shaft coupled to the drive motor to rotate, a main frame arranged under the drive motor, a fixed scroll arranged under the main frame, an orbiting scroll, arranged between the fixed scroll (250) and the mainframe (230), and engaging with the fixed scroll to make an orbiting motion, the rotary shaft being inserted into and eccentrically coupled to the orbiting scroll, a first bearing positioned between the main frame and the rotary shaft, and a second bearing positioned between the fixed scroll and the rotary shaft. A first gap is present between the first bearing and the rotary shaft, a second gap is present between the second bearing and the rotary shaft. At least one of the first and second bearings varies with a vertical position.

The rotary shaft may be disposed such that a center of mass thereof is displaced from a center of the scroll compressor to one side.

A portion of the rotary shaft between the first bearing and the second bearing may be asymmetric.

The first gap between the first bearing and the rotary shaft is wider in a lower portion of the first bearing than in an upper portion of the first bearing.

The second gap between the second bearing and the rotary shaft is wider in an upper portion of the second bearing than in a lower portion of the second bearing.

At least one of the first bearing and the second bearing may include a first ring having a first diameter and a second ring having a second diameter greater than the first diameter, wherein the first ring and the second ring may be arranged side by side in a vertical direction.

At least one of the first bearing and the second bearing may include an inclined surface on an inner side surface thereof, wherein a distance from the inclined surface to the rotary shaft may gradually change.

A main journal of the rotary shaft surrounded by the first bearing and a sub-journal of the rotary shaft surrounded by the second bearing may have a diameter varying with a vertical position.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIGs. 1 and 2 are views showing a rotary shaft and a bearing of a conventional scroll compressor;
FIG. 3 is a sectional view illustrating a scroll compressor according to an embodiment of the present invention; and
FIGs. 4 to 6 are views showing the rotary shaft and bearing of the scroll compressor of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Hereinafter, a scroll compressor according to an embodiment of the present invention will be described with reference to FIG. 3.

FIG. 3 is a sectional view illustrating a scroll compressor according to an embodiment of the present invention.

A scroll compressor 1 according to the embodiment of the present invention may include a casing 210 having an inner space, a drive motor 220 provided in an upper portion of the inner space, a compression unit 200 disposed under the drive motor 220, and a rotary shaft 226 configured to transmit the driving force of the drive motor 220 to the compression unit 200.

Here, the inner space of the casing 210 includes a first space V1, which is at an upper side of the drive motor 220, and a second space V2, which is a space between the drive motor 220 and the compression unit 200. The space under the fixed scroll 250 may be divided into a third space V3 (closed space) defined by a discharge cover 270 hermetically coupled to a lower portion of the fixed scroll 250, and a fourth space V4 (oil reservoir space), which is under the compression unit 200.

The casing 210 may have, for example, a cylindrical shape. Thus, the casing 210 may include a cylindrical shell 211. An upper shell 212 may be provided to an upper portion of the cylindrical shell 211 and a lower shell 214 may be provided to a lower portion of the cylindrical shell 211. The upper and lower shells 212 and 214 may be joined to the cylindrical shell 211 by, for example, welding to define an inner space.

Here, the upper shell 212 may be provided with a refrigerant discharge pipe 216. The refrigerant discharge pipe 216 is a passage through which a compressed refrigerant discharged from the compression unit 200 to the second space V2 and the first space V1 is discharged to the outside. For reference, an oil separator (not shown) for separating the oil mixed in the discharged refrigerant may be connected to the refrigerant discharge pipe 216.

The lower shell 214 may define an oil reservoir space V4 capable of storing oil. The oil reservoir space V4 may function as an oil chamber for supplying oil to the compression unit 200 to allow the compressor 1 to smoothly operate.

Further, a refrigerant suction pipe 218 serving as a passage through which the refrigerant to be compressed is introduced may be provided on the side surface of the cylindrical shell 211. The refrigerant suction pipe 218 may extend to a compression chamber S1 along the side of the fixed scroll 250 in a penetrating manner.

The drive motor 220 may be arranged in the upper operation of the casing 210. Specifically, the drive motor 220 may include a stator 222 and a rotor 224.

The stator 222 may be cylindrical, for example, and may be fixed to the casing 210. The stator 222 has a plurality of slots (not shown) formed on the inner circumferential surface thereof in a circumferential direction such that a coil 222a is wound. In addition, the outer circumferential surface of the stator 222 may be cut into a D-cut shape to form a refrigerant channel groove 212a to allow the refrigerant or oil discharged from the compression unit 200 to pass therethrough.

The rotor 224 may be coupled to the inside of the stator 222 and may generate rotational power. The rotary shaft 226 may be precisely fitted into the center of the rotor 224 such that the rotary shaft 226 can rotate together with the rotor 224. The rotational power generated by the rotor 224 is transmitted to the compression unit 200 through the rotary shaft 226.

The compression unit 200, is arranged under the drive motor 220, may include a fixed scroll 250 coupled to the casing 210, an orbiting scroll 240 coupled with the rotary shaft 226 and engaged with the fixed scroll 250 to form a compression chamber, and a main frame 230 configured to accommodate the orbiting scroll 240 and seated on the fixed scroll 250 to form an outer appearance of the compression unit 200. The compression unit 200 may further include an Oldham ring 150 arranged between the main frame 230 and the orbiting scroll 240 to prevent the orbiting scroll 240 from rotating on the axis thereof.

The main frame 230 may be provided under the drive motor 220 and form the top of the compression unit 200. The main frame 230 may include a frame head plate 232 (hereinafter referred to as a first head plate) having a substantially circular shape, and a frame bearing 232 (hereinafter referred to as a first bearing) disposed at the center of the first head plate 232 and penetrated by the rotary shaft 226, and a frame sidewall portion 231 (hereinafter referred to as a first sidewall portion) protruding downward from an outer circumferential portion of the first head plate 232.

The outer circumferential portion of the first sidewall portion 231 may be in contact with the inner circumferential surface of the cylindrical shell 211, and the lower end of the first sidewall portion 231 may be in contact with the upper end of a fixed scroll sidewall portion 255, which will be described later.

The first sidewall portion 231 may be provided with a frame discharge hole 231a (hereinafter referred to as a first discharge hole) which penetrates the first sidewall portion 231 in the axial direction and forms a refrigerant passage. The inlet of the first discharge hole 231a may be connected to the outlet of a fixed scroll discharge hole 256b, which will be described later, and the outlet of the first discharge hole 231a may be connected to the second space V2.

The first bearing 232a may protrude from the upper surface of the first head plate 232 toward the drive motor 220. In addition, the first bearing 232a may be provided with a first rotation portion through which a main journal 226c of the rotary shaft 226, which will be described later, is arranged so as to be supported.

That is, the first bearing 232a, through which the main journal 226c of the rotary shaft 226 is rotatably inserted and supported, may be formed at the center of the main frame 230 in the axial direction.

An oil pocket 232b for collecting oil discharged from a first gap between the first bearing 232a and the rotary shaft 226 may be formed in the upper surface of the first head plate 232.

Specifically, the oil pocket 232b may be engraved on the upper surface of the first head plate 232 and be formed in an annular shape along the outer circumferential surface of the first bearing 232a.

A back pressure chamber S2 may be formed on the bottom surface (i.e., the lower surface) of the main frame 230 to define a space together with the fixed scroll 250 and the orbiting scroll 240 such that t the orbiting scroll 240 is supported by the pressure in the space.

For reference, the back pressure chamber S2 may be an intermediate pressure area (i.e., an intermediate pressure chamber) and an oil supply passage 226a provided in the rotary shaft 226 may be at a higher pressure than the back pressure chamber S2. Further, the space enclosed by the rotary shaft 226, the main frame 230, and the orbiting scroll 240 may be a high-pressure area.

A back pressure seal 280 may be provided between the main frame 230 and the orbiting scroll 240 to distinguish the high pressure area from the intermediate pressure area S2. The back pressure seal 280 may serve as, for example, a sealing member.

In addition, the main frame 230 may be coupled with the fixed scroll 250 to define a space in which the orbiting scroll 240 can be pivotably arranged. That is, this structure may be configured to surround the rotary shaft 226 such that rotational power can be transmitted to the compression unit 200 via the rotary shaft 226.

The fixed scroll 250, which forms the first scroll, may be coupled to the bottom surface of the main frame 230.

Specifically, the fixed scroll 250 may be arranged under the main frame 230.

The fixed scroll 250 may include a fixed scroll head plate (second head plate) 254 having a substantially circular shape, a fixed scroll sidewall portion 254 protruding upward from the outer circumferential portion of the second head plate 254, a fixed lap 251 protruding from the upper surface of the second head plate 254 and meshing (i.e., engaging) with an orbiting lap 241 of the orbiting scroll 240, which will be described later, to form the compression chamber S1, and a fixed scroll bearing accommodation portion 252 (hereinafter referred to as a second bearing accommodation portion) formed at the center of the back surface (i.e., lower surface) of the second head plate 254 and penetrated by the rotary shaft 226.

The second head plate 254 may be provided with a discharge port 253 for guiding the compressed refrigerant from the compression chamber S1 to the inner space of the discharge cover 270. Further, the position of the discharge port 253 may be set in consideration of a required discharge pressure or the like.

Here, the discharge port 253 is arranged to face the lower shell 214. Accordingly, the discharge cover 270 for accommodating the discharged refrigerant and guiding the refrigerant to a fixed scroll discharge hole 256b, which will be described later, so as not to be mixed with oil may be coupled to the bottom surface (i.e., lower surface) of the fixed scroll 250.

The discharge cover 270 may be hermetically coupled to the bottom surface of the fixed scroll 250 to separate the refrigerant discharge passage from the oil reservoir space V4. The discharge cover 270 may be provided with a through hole (not shown) through which an oil feeder 271, which is coupled to a sub-journal 226g of the rotary shaft 226 and submerged in the oil reservoir space V4 of the casing 210, is arranged.

For reference, the discharge cover 270 is also referred to as a muffler, and a detailed description thereof will be given later.

The outer circumferential portion of the second sidewall portion 255 may be in contact with the inner circumferential surface of the cylindrical shell 211 and the upper end portion of the second sidewall portion 255 may be in contact with the lower end portion of the first sidewall portion 231.

The second sidewall portion 255 may be provided with a fixed scroll discharge hole 256b (hereinafter referred to as a second discharge hole) penetrating the second sidewall portion 255 in the axial direction to form a refrigerant passage together with the first discharge hole 231a.

The second discharge hole 256b may be formed so as to correspond to the first discharge hole 231a. The inlet of the second discharge hole 256b may be connected to the inner space of the discharge cover 270 and the outlet of the second discharge hole 256b may be connected to the inlet of the first discharge hole 231a.

Here, the second discharge hole 256b and the first discharge hole 231a may be formed to connect the third space V3 and the second space V2 such that the refrigerant discharged from the compression chamber S1 into the inner space of the discharge cover 270 is guided to the second space V2.

The second sidewall 255 may be provided with a refrigerant suction pipe 218 connected to the suction side of the compression chamber S1. In addition, the refrigerant suction pipe 218 may be arranged spaced apart from the second discharge hole 256b.

The second bearing 252 may protrude from the lower surface of the second head plate 254 toward the oil reservoir space V4.

A second rotation portion may be provided in the second bearing 252 such that a sub-journal 226g of the rotary shaft 226, which will be described later, is inserted into and supported by the second rotation portion.

In addition, the lower end portion of the second bearing 252 may be bent toward the center of the shaft to support the lower end of the sub-journal 226g of the rotary shaft 226 to form a thrust bearing surface.

The orbiting scroll 240, which is formed as the second scroll, may be arranged between the main frame 230 and the fixed scroll 250.

Specifically, the orbiting scroll 240 may be coupled to the rotary shaft 226 to form a pair of two compression chambers S1 between the fixed scroll 250 and the orbiting scroll 240 while making an orbiting motion.

The orbiting scroll 240 may include an orbiting scroll head plate 245 (hereinafter referred to as a third head plate) having a substantially circular shape, an orbiting lap 254 protruding from the lower surface of the third head plate 245 and engaged with the fixed lap 251, and a rotary shaft coupling portion 242 provided at the center of the third head plate 245 and rotatably coupled to an eccentric portion 226f of the rotary shaft 226, which will be described later.

In the case of the orbiting scroll 240, the outer circumferential portion of the third head plate 245 may be located at the upper end portion of the second sidewall portion 255 and the lower end portion of the orbiting lap 241 may be in close contact with the upper surface of the second head plate 254 so as to be supported by the fixed scroll 250.

The outer circumferential portion of the rotary shaft coupling portion 242 is connected to the orbiting lap 241 to form the compression chamber S1 together with the fixed lap 251 during the compression operation.

For reference, the fixed lap 251 and the orbiting lap 241 may be formed in an involute shape, or may be formed in various other shapes.

Here, the involute shape refers to a curve corresponding to a trajectory drawn by an end of a thread when the thread wound around a base circle having an arbitrary radius is released.

The eccentric portion 226f of the rotary shaft 226 may be inserted into the rotary shaft coupling portion 242. The eccentric portion 226f inserted into the rotary shaft coupling portion 242 may overlap the orbiting lap 241 or the fixed lap 251 in the radial direction of the compressor.

Here, the radial direction may refer to a direction (i.e., the lateral direction) perpendicular to the axial direction (i.e., the vertical direction). More specifically, the radial direction may refer to a direction extending inward from the outside outward from the inside with respect to the rotatory shaft.

As described above, when the eccentric portion 226f of the rotary shaft 226 is arranged through the head plate 245 of the orbiting scroll 240 to radially overlap the orbiting lap 241, the repulsive force of the refrigerant and the compressive force may be applied to the same plane with respect to the third head plate 245, and may thus be canceled to a certain degree.

The rotary shaft 226 may be coupled to the drive motor 220 and be provided with an oil supply passage 226a for guiding the oil contained in the oil reservoir space V4 of the casing 210 upward.

Specifically, the upper portion of the rotary shaft 226 may be press-fitted to the center of the rotor 224, and the lower portion thereof may be coupled to the compression unit 200 and supported in the radial direction.

Accordingly, the rotary shaft 226 may transmit the rotational power of the drive motor 220 to the orbiting scroll 240 of the compression unit 200. Thereby, the orbiting scroll 240 eccentrically coupled to the rotary shaft 226 makes an orbiting movement with respect to the fixed scroll 250.

The main journal 226c may be formed at a lower portion of the rotary shaft 226 so as to be inserted into the first bearing 232a of the main frame 230 and radially supported. The sub-journal 226g may be formed at the lower portion of the main journal 226c so as to be inserted into the second bearing 252 of the fixed scroll 250 and radially supported.

The eccentric portion 226f may be formed between the main journal 226c and the sub-journal 226g so as to be inserted into and coupled to the rotary shaft coupling portion 242 of the orbiting scroll 240.

The main journal 226c and the sub-journal 226g may be coaxially arranged so as to have the same axial center. On the other hand, the eccentric portion 226f may be arranged so as to be eccentric in the radial direction with respect to the main journal 226c or the sub-journal 226g.

For reference, the eccentric portion 226f may have an outer diameter less than the outer diameter of the main journal 226c and larger than an outer diameter of the sub-journal 226g. In this case, the rotary shaft 226 may be easily coupled through the respective bearing accommodation portions 232a and 252 and the rotary shaft coupling portion 242.

Alternatively, the eccentric portion 226f may not be integrated with the rotary shaft 226 but may be formed using a separate bearing. In this case, the outer diameter of the sub-journal 226g may not be less than the outer diameter of the eccentric portion 226f, and the rotation axis 226 may be inserted into and coupled to the respective bearing accommodation portions 232a and 252 and the rotary shaft coupling portion 242.

An oil supply passage 226a for supplying the oil from the oil reservoir space V4 to the outer circumferential surfaces of the rotary portions 226c and 226g and the outer circumferential surface of the eccentric portion 226f may be formed in the rotary shaft 226. In addition, the rotary portions 226c and 226g and the eccentric portion 226f of the rotary shaft 226 may be provided with oil holes 228a, 228b, 228d, and 228e extending from the oil supply passage 226a to the outer circumferential surfaces in a penetrating manner.

For reference, the oil guided upward through the oil supply passage 226a may be discharged through the oil holes 228a, 228b, 228d, and 228e and supplied to the bearing surface or the like.

An oil feeder 271 for pumping the oil filling the oil reservoir space V4 may be coupled to the lower end of the rotary shaft 226, that is, the lower end of the sub-journal 226g.

The oil feeder 271 may include an oil supply pipe 273 inserted into and coupled to the oil supply passage 226a of the rotary shaft 226, and an oil intake member 274 inserted into the oil supply pipe 273 to suction the oil.

Here, the oil supply pipe 273 may be arranged through the through hole of the discharge cover 270 so as to be submerged in the oil reservoir space V4, and the oil intake member 274 may function like a propeller.

Although not shown in the drawings, a trochoid pump (not shown) may be provided in the sub-journal 226g or the discharge cover 270 in place of the oil feeder 271 to forcibly pump the oil contained in the oil reservoir space V4 upward.

Although not shown in the drawings, the scroll compressor according to the embodiment of the present invention may further include a first sealing member (not shown) for sealing the gap between the upper end of the main journal 226c and the upper end of the main frame 230, and a second sealing member (not shown) for sealing the gap between the lower end of the sub-journal 226g and the lower end of the fixed scroll 250.

For reference, with the first and second sealing members, the oil may be prevented from flowing out of the compression unit 200 along the bearing surface, thereby realizing a differential-pressure oil supply structure and preventing reverse flow of the refrigerant.

The rotor 224 or the rotary shaft 226 may be coupled with a balance weight 227 for suppressing noise vibration.

For reference, the balance weight 227 may be arranged in a space between the drive motor 220 and the compression unit 200, that is, the second space V2.

Hereinafter, operation of the scroll compressor 1 according to the embodiment of the present invention will be described.

When power is applied to the drive motor 220 to generate a rotational force, the rotary shaft 226 coupled to the rotor 224 of the drive motor 220 begins to rotate. Then, the orbiting scroll 240 eccentrically coupled to the rotary shaft 226 is pivotally moved with respect to the fixed scroll 250 to form the compression chamber S1 between the orbiting lap 241 and the fixed lap 251. The compression chamber S1 may be formed in several stages in succession as the volume gradually decreases toward the center.

The refrigerant supplied from the outside of the casing 210 through the refrigerant suction pipe 218 may be directly introduced into the compression chamber S1. The refrigerant may be compressed as it is moved toward the discharge chamber of the compression chamber S1 by the orbiting motion of the orbiting scroll 240. Then, the refrigerant may be discharged from the discharge chamber to the third space V3 through the discharge port 253 of the fixed scroll 250.

Thereafter, the compressed refrigerant discharged into the third space V3 flows to the inner space of the casing 210 (i.e., the second space V2 and the first space V1) through the second discharge hole 256b and the first discharge hole 231a, and is then discharged from the casing 210 through the refrigerant discharge pipe 216.

Here, the refrigerant discharged into the third space V3 may be guided to the second discharge hole 256b by the discharge cover 270 without being leaked to the oil reservoir space V4.

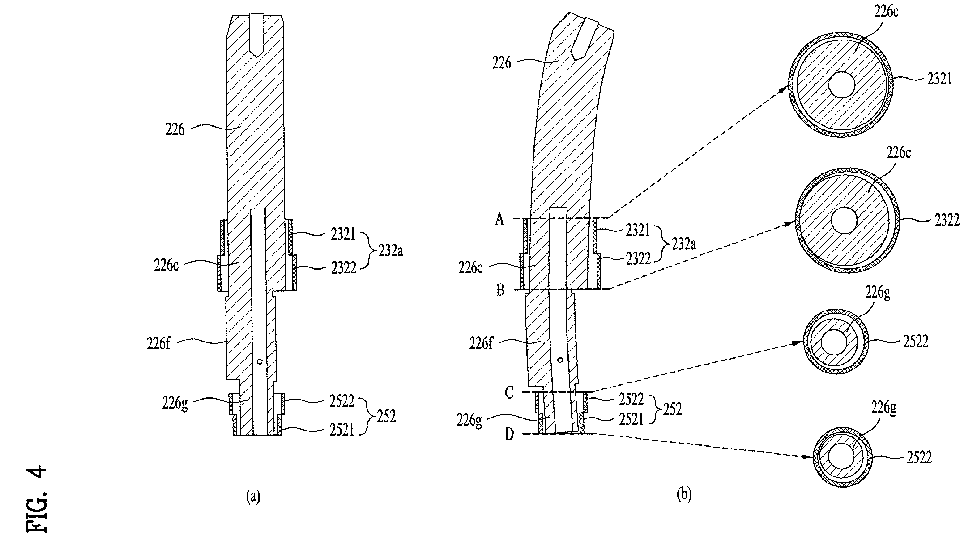

FIGs. 4 to 6 are views showing the rotary shaft 226 and bearing of the scroll compressor of the present invention.

The rotary shaft 226 is coupled to the drive motor 220 and is rotated by the rotational force of the drive motor 220 transmitted thereto. The rotary shaft 226 is arranged through the main frame 230, the orbiting scroll 240, the fixed scroll 250 and the discharge cover, and the lower end thereof is submerged in the oil reservoir space. The oil feeder 271 located at the lower end of the rotary shaft 226 submerged in the oil reservoir space suctions the oil in the oil reservoir space and supplies the oil to the oil supply passage 226a inside the rotary shaft 226. The oil in the oil supply passage 226a is supplied to the journal bearing through the oil holes 228a, 228b, 228d, and 228e extending from the oil supply passage 226a to the outer circumferential surface in a penetrating manner, thereby enhancing the rotation operation between the rotary shaft 226 and the bearing.

Ball bearings are problematic in terms of durability and smooth rotation because the force is concentrated at specific contact points thereof. Accordingly, the scroll compressor of the present invention may employ a journal bearing, which enhances the rotational operation using oil between the bearing and the rotary shaft 226 such that force is uniformly applied along the circumference of the rotary shaft. The journal bearing is not fixed to the rotary shaft 226 but is spaced apart from the rotary shaft 226 by a predetermined distance. The main frame 230 and the fixed scroll 250, which do not rotate, include a first bearing 232a and a second bearing 252 that are spaced apart from the rotary shaft 226 by a predetermined distance in order not to interfere with rotation of the rotary shaft 226.

A portion of the rotary shaft 226 surrounded by the first bearing 232a is referred to as a main journal 226c. The rotary shaft 226 may rotate while the main journal 226c and the first bearing 232a are not in direct contact with each other but maintained at a predetermined distance from each other using the oil between the first bearing 232a and the main journal 226c. The first bearing 232a and the main journal 226c constitute a first rotating portion.

Similarly, a portion of the rotary shaft 226 surrounded by the second bearing 252 is referred to as a sub-journal 226g. The rotary shaft 226 may rotate while the sub-journal 226g and the second bearing 252 are not in direct contact with each other but maintained at a predetermined distance from each other using the oil between the second bearing 252 and the sub journal. The second bearing 252 and the sub-journal 226g constitute a second rotating portion.

As shown in FIG. 1(b), the first bearing 232a and the main journal 226c are spaced apart from each other and the second bearing 252 and the sub-journal 226g are spaced apart from each other by a predetermined distance.

The eccentric portion 226f in a space between the first bearing 232a and the second bearing 252 where the orbiting scroll 240 is located has an asymmetric structure. Accordingly, when the rotary shaft 226 is rotated by the driving force of the drive unit, the eccentric portion 226f is slightly displaced from the center, and thus the rotary shaft 226 is bent as shown in FIG. 2(a). When the rotary shaft is bent, the first bearing 232a and the main journal 226c come into contact with each other to generate friction, and the second bearing 252 and the sub-journal 226g come into contact with each other to generate friction, shown in FIG. 2(b). Thereby, rotation is not smoothly performed.

Since the eccentric portion 226f is biased to one side, the portions of the first bearing 232a and the second bearing 252 that come into contact with the main journal 226c and the sub-journal 226g are closer to the eccentric portion 226f. That is, the lower portion of the first bearing 232a and the upper portion of the second bearing 252 come into contact with the journals. In order to address this issue, the first bearing 232a and the main journal 226c in the first rotating portion of the present invention may be arranged such that the first gap therebetween varies according to a vertical position, and the second bearing 252 and the sub-journal 226g in the second rotating portion are arranged such that the second gap therebetween varies according to a vertical position. That is, the first gap between the first bearing 232a and the main journal 226c is wider at a lower position than at a higher position, while the second gap between the second bearing 252 and the sub-journal 226g is narrower at a lower position than at an higher position.

In order to vary the first gap between the first bearing 232a and the main journal 226c and the second gap between the second bearing 252 and the sub-journal 226g with a vertical position, the first bearing 232a and the second bearing 252 needs to be designed differently from the conventional cases, or the shape of the main journal 226c or the sub-journal 226g needs to be changed from the conventional shape.

As shown in FIG. 4(a), each of the first bearing 232a and the second bearing 252 may include a plurality of rings arranged in the vertical direction and having diameters different from each other. Since the first ring has a smaller diameter than the second ring, the gap between the main journal 226c or the sub journal 226g and the second ring is larger than the gap between the main journal 226c or the sub-journal 226g and the first ring. The portion of the rotary shaft corresponding to the second ring is eccentrically rotated with respect to the center, and accordingly the second ring may be formed to be larger than the first ring to avoid contact between the rotary shaft and the bearing.

In the first bearing 232, the first ring 2321 may be disposed on the second ring 2322. In the second bearing 252, the first ring 2521is disposed under the second ring 2522.

As shown in FIG. 4(b), the second rings 2322 and 2522 are larger than the conventional bearings, and accordingly may rotate without contacting the main journal 226c and the sub-journal 226g. Therefore, deterioration of the rotational force and durability caused by friction may be prevented, and noise may be reduced.

While one ring is provided per bearing in the present embodiment, a plurality of rings may be used per bearing, and the first ring and the second ring may be configured as independent rings. The rings may also be formed to have steps on the inner side surfaces thereof. The number of steps may not be two but may be greater than or equal three. The steps may have different heights.

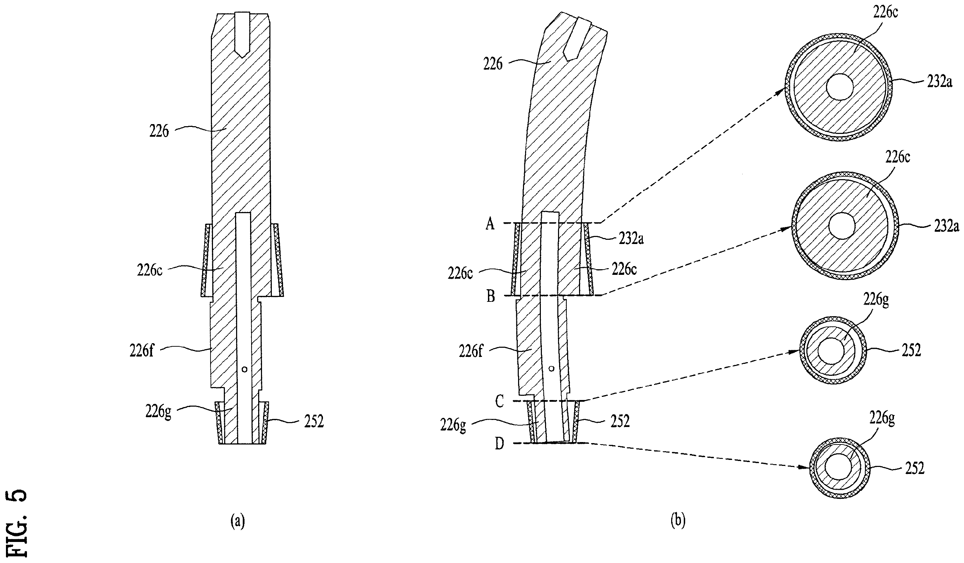

As shown in FIG. 5(a), the first bearing 232a and the second bearing 252 may have inclined surfaces in the vertical direction. The inclined surface of the first bearing 232a may have a narrow upper portion and a wide lower portion. The inclined surface of the second bearing 252 may have a wide upper portion and a narrow lower portion. The first gap between the first bearing 232a and the main journal 226c and the second gap between the second bearing 252 and the sub-journal 226g may be varied with a vertical position by the inclined surfaces of the first bearing 232a and the second bearing 252.

As shown in FIG. 5(b), even when the rotary shaft rotates, the lower portion of the first bearing 232a may not touch the main journal 226c, and the upper portion of the second bearing 252 may not touch the sub-journal 226g. Accordingly, deterioration of the rotational force and durability caused by friction may be prevented, and noise may be reduced.

The inclined surface of the bearing may have the same slope from the upper portion to the lower portion of the bearing. Alternatively, the inclined surface may have a slop varying with the position, or the inclined surface may be curved.

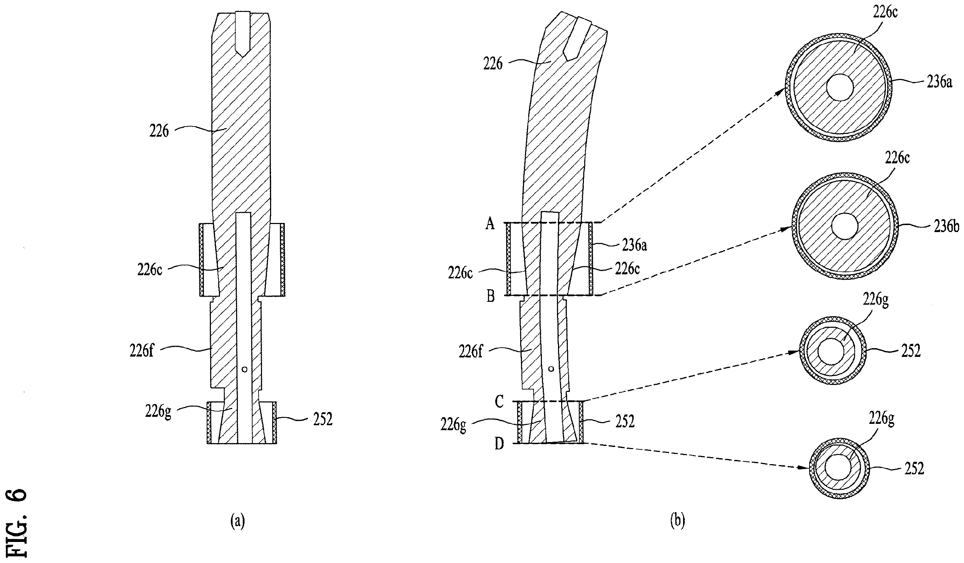

As shown in FIG. 6(a), the diameters of first bearing 232a and the second bearing 252 may be constant, but the diameters of the main journal 226c and the sub-journal 226g may vary between the upper portions and lower portions of the main journal 226c and the sub-journal 226g. In contrast with the case of FIG. 5(a), and inclined surfaces may be formed on the rotary shaft 226 such that the upper portion of the main journal 226c has a larger diameter than the lower portion of the main journal 226c, and the upper portion of the sub-journal 226g has a smaller diameter than the lower portion of the sub-journal 226g. Thus, the first gap between the first bearing 232a and the main journal 226c and the second gap between the second bearing 252 and the sub-journal 226g may vary with a vertical position.

As the first gap between the first bearing 232a and the main journal 226c and the second gap between the second bearing 252 and the sub-journal 226g are formed to vary with a vertical position as described above, degradation of the performance of the first bearing 232a and the second bearing 252 due to deflection of the rotary shaft 226, which occurs when the orbiting scroll 240 is rotated according to rotation of the rotary shaft 226, may be addressed.

In the embodiments described above, the first bearing 232a and the second bearing 252 are vertically symmetric with respect to the eccentric portion 226f, but they are not necessarily required to have a symmetrical structure. The embodiments of FIGs. 4 to 6 may be used in combination.

For example, the first bearing 232a may be composed of a first ring 2321 and a second ring 2322 which have different diameters, and the second bearing 252 may have an inclined inner surface.

As described above, the scroll compressor 1 according to the present invention may prevent an eccentric effect occurring during rotation of the rotary shaft 226 from lowering performance of the bearing, thereby preventing noise and degradation of compression performance.

Further, friction, which lowers durability, may be prevented, thereby increasing the service life of the compressor 1 and reducing the maintenance cost.

As apparent from the above description, the present invention has effects as follows.

The scroll compressor according to the present invention may prevent performance of the bearing from being deteriorated due to the eccentric effect occurring during rotation of the rotary shaft, thereby preventing noise from being generated and preventing compression performance from being degraded.

Further, friction may be prevented from deteriorating durability, thereby increasing the service life of the compressor and reducing the maintenance cost.

The above and other objects, features and advantages of the present invention are more apparent from the detailed description taken in conjunction with the accompanying drawings.

It will be apparent to those skilled in the art that various substitutions, modifications, and variations can be made in the present invention without departing from the scope of the invention. Thus, it is intended that the present invention covers the modifications and variations of this invention provided they come within the scope of the appended claims. Therefore, the present invention is not limited by the above-described embodiments and the accompanying drawings.

## Claims

1. A scroll compressor comprising:
a casing (210);
a drive motor (220) arranged in an inner space of the casing (210);
a rotary shaft (226) coupled to the drive motor (220) to rotate;
a main frame (230) arranged under the drive motor (220);
a fixed scroll (250) arranged under the main frame (230);
an orbiting scroll (240), arranged between the fixed scroll (250) and the mainframe (230), and engaging with the fixed scroll (250) to make an orbiting motion, the rotary shaft (226) being inserted into and eccentrically coupled to the orbiting scroll (240),
a first bearing (232) positioned between the main frame (230) and the rotary shaft (226), wherein a first gap is present between the first bearing (232) and the rotary shaft (226); and
a second bearing (252) positioned between the fixed scroll (250) and the rotary shaft (226), wherein a second gap is present between the second bearing (252) and the rotary shaft,
wherein at least one of the first and second gaps (232; 252) varies with a vertical position,
**characterised in that**
the first gap between the first bearing (232) and the rotary shaft (226) is wider in a lower portion of the first bearing (232) than in an upper portion of the first bearing (232), and
wherein the second gap between the second bearing (252) and the rotary shaft (226) is wider in an upper portion of the second bearing (252) than in a lower portion of the second bearing (252).

2. The scroll compressor of claim 1, wherein the rotary shaft (226) is disposed such that a center of mass thereof is displaced from a center of the scroll compressor to one side.

3. The scroll compressor of claim 2, wherein a portion of the rotary shaft (226) between the first bearing (232) and the second bearing (252) is asymmetric.

4. The scroll compressor of any one of the preceding claims, wherein at least one of the first bearing (232) and the second bearing (252) comprises
a first ring (2321; 2521) having a first diameter and a second ring (2322; 2522) having a second diameter greater than the first diameter,
wherein the first ring (2321; 2521) and the second ring (2322; 2522) are arranged side by side in a vertical direction.

5. The scroll compressor of any one of the preceding claims, wherein at least one of the first bearing (232) and the second bearing (252) comprises an inclined surface on an inner side surface thereof,
wherein a distance from the inclined surface to the rotary shaft (226) gradually changes.

6. The scroll compressor of any one of the preceding claims, wherein a main journal of the rotary shaft (226) surrounded by the first bearing (232) and a sub-journal of the rotary shaft (226) surrounded by the second bearing (252) have a diameter varying with a vertical position.

## Patentansprüche

1. Spiralverdichter, der aufweist:
ein Gehäuse (210);
einen Antriebsmotor (220), der in einem Innenraum des Gehäuses (210) angeordnet ist;
eine Drehwelle (226), die mit dem Antriebsmotor (220) gekoppelt ist, um zu drehen;
einen Hauptrahmen (230), der unter dem Antriebsmotor (220) angeordnet ist;
eine feste Spirale (250), die unter dem Hauptrahmen (230) angeordnet ist;
eine umlaufende Spirale (240), die zwischen der festen Spirale (250) und dem Hauptrahmen (230) angeordnet ist und einen Eingriff mit der festen Spirale (250) herstellt, um eine Umlaufbewegung durchzuführen, wobei die Drehwelle (226) in die umlaufende Spirale (240) eingeführt und damit außermittig gekoppelt ist,
ein erstes Lager (232), das zwischen dem Hauptrahmen (230) und der Drehwelle (226) angeordnet ist, wobei ein erster Spalt zwischen dem ersten Lager (232) und der Drehwelle (226) vorhanden ist; und
ein zweites Lager (252), das zwischen der festen Spirale (250) und der Drehwelle (226) angeordnet ist, wobei ein zweiter Spalt zwischen dem zweiten Lager (252) und der Drehwelle vorhanden ist,
wobei der erste und/oder zweite Spalt (232; 252) mit einer Vertikalposition variieren,
**dadurch gekennzeichnet, dass**
der erste Spalt zwischen dem ersten Lager (232) und der Drehwelle (226) in einem unteren Abschnitt des ersten Lagers (232) breiter als in einem oberen Abschnitt des ersten Lagers (232) ist, und
wobei der zweite Spalt zwischen dem zweiten Lager (252) und der Drehwelle (226) in einem oberen Abschnitt des zweiten Lagers (252) breiter als in einem unteren Abschnitt des zweiten Lagers (252) ist.

2. Spiralverdichter nach Anspruch 1, wobei die Drehwelle (226) so angeordnet ist, dass ein Schwerpunkt davon von einer Mitte des Spiralverdichters zu einer Seite verlagert ist.

3. Spiralverdichter nach Anspruch 2, wobei ein Abschnitt der Drehwelle (226) zwischen dem ersten Lager (232) und dem zweiten Lager (252) asymmetrisch ist.

4. Spiralverdichter nach einem der vorstehenden Ansprüche, wobei das erste Lager (232) und/oder das zweite Lager (252) aufweisen:
einen ersten Ring (2321; 2521) mit einem ersten Durchmesser und einen zweiten Ring (2322; 2522) mit einem zweiten Durchmesser, der größer als der erste Durchmesser ist,
wobei der erste Ring (2321; 2521) und der zweite Ring (2322; 2522) in Vertikalrichtung nebeneinander angeordnet sind.

5. Spiralverdichter nach einem der vorstehenden Ansprüche, wobei das erste Lager (232) und/oder das zweite Lager (252) eine geneigte Oberfläche auf einer Innenseite davon aufweisen,
wobei sich ein Abstand von der geneigten Oberfläche zur Drehwelle (226) allmählich ändert.

6. Spiralverdichter nach einem der vorstehenden Ansprüche, wobei ein Hauptzapfen der Drehwelle (226), der vom ersten Lager (232) umgeben ist, und ein Nebenzapfen der Drehwelle (226), der vom zweiten Lager (252) umgeben ist, einen mit einer Vertikalposition variierenden Durchmesser haben.

## Revendications

1. Compresseur à spirales comprenant :
un carter (210) ;
un moteur d'entraînement (220) agencé dans un espace interne du carter (210) ;
un arbre rotatif (226) couplé au moteur d'entraînement (220) pour tourner ;
un bâti principal (230) agencé sous le moteur d'entraînement (220) ;
une spirale fixe (250) agencée sous le bâti principal (230) ;
une spirale orbitale (240) agencée entre la spirale fixe (250) et le bâti principal (230), et se mettant en prise avec la spirale fixe (250) pour décrire un mouvement orbital, l'arbre rotatif (226) étant inséré dans et couplé de manière excentrique à la spirale orbitale (240),
un premier palier (232) positionné entre le bâti principal (230) et l'arbre rotatif (226), dans lequel un premier espace est présent entre le premier palier (232) et l'arbre rotatif (226) ; et
un second palier (252) positionné entre la spirale fixe (250) et l'arbre rotatif (226), dans lequel un second espace est présent entre le second palier (252) et l'arbre rotatif,
dans lequel au moins l'un parmi les premier et second espaces (232 ; 252) varie avec une position verticale,
**caractérisé en ce que** :
le premier espace entre le premier palier (232) et l'arbre rotatif (226) est plus large dans une partie inférieure du premier palier (232) que dans une partie supérieure du premier palier (232), et
dans lequel le second espace entre le second palier (252) et l'arbre rotatif (226) est plus large dans une partie supérieure du second palier (252) que dans une partie inférieure du second palier (252).

2. Compresseur à spirales selon la revendication 1, dans lequel l'arbre rotatif (226) est disposé de sorte que son centre de masse est déplacé d'un centre du compresseur à spirales à un côté.

3. Compresseur à spirales selon la revendication 2, dans lequel une partie de l'arbre rotatif (226) entre le premier palier (232) et le second palier (252) est asymétrique.

4. Compresseur à spirales selon l'une quelconque des revendications précédentes, dans lequel au moins l'un parmi le premier palier (232) et le second palier (252) comprend :
une première bague (2321 ; 2521) ayant un premier diamètre et une seconde bague (2322 ; 2522) ayant un second diamètre supérieur au premier diamètre,
dans lequel la première bague (2321 ; 2521) et la seconde bague (2322 ; 2522) sont agencées côte à côte dans une direction verticale.

5. Compresseur à spirales selon l'une quelconque des revendications précédentes, dans lequel au moins l'une parmi la première bague (232) et la seconde bague (252) comprend une surface inclinée sur sa surface latérale interne,
dans lequel une distance allant de la surface inclinée à l'arbre rotatif (226) change progressivement.

6. Compresseur à spirales selon l'une quelconque des revendications précédentes, dans lequel un tourillon principal de l'arbre rotatif (226) entouré par le premier palier (232) et un tourillon secondaire de l'arbre rotatif (226) entouré par le second palier (252) ont un diamètre variant avec une position verticale.
